# EUROPÄISCHE PATENTSCHRIFT

(11) **EP 4 388 837 B1**
(45) Veröffentlichungstag und Bekanntmachung des Hinweises auf die Patenterteilung: **17.09.2025**
(21) Anmeldenummer: 23401044.5
(22) Anmeldetag: 18.12.2023
(51) Int. Cl.: A01B 3/46, A01B 63/22

(54) **BODENBEARBEITUNGSGERÄT UND VERFAHREN ZUM BETREIBEN EINES BODENBEARBEITUNGSGERÄTS**
SOIL WORKING DEVICE AND METHOD FOR OPERATING A SOIL WORKING DEVICE
APPAREIL DE TRAITEMENT DU SOL ET PROCÉDÉ DE FONCTIONNEMENT D'UN APPAREIL DE TRAITEMENT DU SOL

(30) Priorität: 21.12.2022 DE 102022134342
(43) Veröffentlichungstag der Anmeldung: 26.06.2024
(73) Patentinhaber: Amazonen-Werke H. Dreyer SE & Co. KG, 49205 Hasbergen (DE)
(72) Erfinder: Wilken, Martin, 49205 Hasbergen (DE); Rehnen, Pascal, 49205 Hasbergen (DE); Eickhoff, Lennard, 49205 Hasbergen (DE)

(56) Entgegenhaltungen:
- DE-A1- 102006 039 513
- DE-A1- 102013 005 337

## Beschreibung

Die Erfindung betrifft ein Bodenbearbeitungsgerät nach dem Oberbegriff des Patentanspruchs 1 und ein Verfahren zum Betreiben eines Bodenbearbeitungsgeräts nach dem Oberbegriff des Patentanspruchs 9.

Ein derartiges Bodenbearbeitungsgerät ist in DE 10 2006 039 513 A1 offenbart.

Weitere Bodenbearbeitungsgeräte weisen regelmäßig ein Fahrwerk auf, welches eine hydraulische Aushubeinrichtung und zumindest ein Rad umfasst. Das Rad des Fahrwerks und der Maschinenrahmen des Bodenbearbeitungsgeräts sind über die hydraulische Aushubeinrichtung des Fahrwerks relativ zueinander bewegbar, sodass über die Relativbewegung von Rad und Maschinenrahmen die Arbeitstiefe von Bodenbearbeitungswerkzeugen des Bodenbearbeitungsgeräts eingestellt werden kann. Ferner können die Bodenbearbeitungswerkzeuge über eine Relativbewegung von Rad und Maschinenrahmen aus dem Erdreich ausgehoben werden.

Zum Einstellen der Arbeitstiefe und zum Ausheben der Bodenbearbeitungswerkzeuge umfasst die Aushubeinrichtung üblicherweise ein Hydrauliksystem mit einem einen Primärkolben und einen Schwimmkolben aufweisenden Hydraulikzylinder. Zum Einstellen der Arbeitstiefe der Bodenbearbeitungswerkzeuge wird der Hydraulikzylinder bisher derart mit druckbeaufschlagter Hydraulikflüssigkeit versorgt, dass der Schwimmkolben in Richtung des Primärkolbens bewegt wird, wodurch die Schwimmkolbenbewegung ein Ausfahren des Primärkolbens verursacht. Zum Ausheben der Bodenbearbeitungswerkzeuge wird der Hydraulikzylinder andererseits derart mit druckbeaufschlagter Hydraulikflüssigkeit versorgt, dass ein Ausfahren des Primärkolbens ohne gleichzeitige Schwimmkolbenbewegung erfolgt.

In der Praxis hat sich herausgestellt, dass die Arbeitstiefeneinstellung bei dieser Hydraulikverschaltung fehleranfällig ist, da die an den Primärkolben angrenzende Primärkolbenkammer des Hydraulikzylinders bei der Einstellung der Arbeitstiefe soweit entleert sein muss, dass sich der Primärkolben in einer Nullstellung befindet. Wenn sich der Primärkolben nicht in der Nullstellung befindet, wird die Arbeitstiefeneinstellung durch die unbeabsichtigte Befüllung der Primärkolbenkammer verfälscht.

Die der Erfindung zugrunde liegende Aufgabe besteht also darin, das Risiko von fehlerhaften Arbeitstiefeneinstellungen an Bodenbearbeitungsgeräten zu verringern.

Die Aufgabe wird gelöst durch ein Bodenbearbeitungsgerät mit den Merkmalen des Anspruchs 1, wobei in dem Einstellschaltzustand des Ventilsystems eine fluidleitende Verbindung von der Druckleitung zu einer an den Primärkolben angrenzenden Primärkolbenkammer des Hydraulikzylinders freigegeben ist, sodass durch Einleiten von druckbeaufschlagter Hydraulikflüssigkeit in die Druckleitung ein Ausfahren des Primärkolbens zum Einstellen der Arbeitstiefe bewirkbar ist.

Das Rad des Fahrwerks und der Maschinenrahmen sind über die hydraulische Aushubeinrichtung des Fahrwerks zum Einstellen der Arbeitstiefe der Bodenbearbeitungswerkzeuge und zum Verbringen der Bodenbearbeitungswerkzeuge in die Aushubstellung relativ zueinander bewegbar. Die Einstellung der Arbeitstiefe und die Bedienung des Aushubs kann über das gleiche Hydrauliksteuergerät des Traktors erfolgen, sodass die übrigen Hydrauliksteuergeräte für andere Funktionen verwendet werden können.

Der Hydraulikzylinder der Aushubeinrichtung ist vorzugsweise ein einfach wirkender Hydraulikzylinder. Das Bodenbearbeitungsgerät kann eine gezogene Maschine sein. Das Bodenbearbeitungsgerät kann ein Monoradaufsatteldrehpflug sein.

In einer bevorzugten Ausführungsform des erfindungsgemäßen Bodenbearbeitungsgeräts ist der Primärkolben als Plungerkolben ausgebildet. Die Kolbenstange des Hydraulikzylinders dient also als Primärkolben. Der Hydraulikzylinder ist somit ein Plungerzylinder mit einem als Plungerkolben ausgebildeten Primärkolben und einem Schwimmkolben.

Bei dem erfindungsgemäßen Bodenbearbeitungsgerät ist in dem Aushubschaltzustand des Ventilsystems eine fluidleitende Verbindung von der Druckleitung zu einer an den Schwimmkolben angrenzenden Schwimmkolbenkammer des Hydraulikzylinders freigegeben, sodass durch Einleiten von druckbeaufschlagter Hydraulikflüssigkeit in die Druckleitung eine zum Ausfahren des Primärkolbens führende Axialbewegung des Schwimmkolbens in Richtung des Primärkolbens zum Verbringen der Bodenbearbeitungswerkzeuge in die Aushubstellung bewirkbar ist. Zum Verbringen der Bodenbearbeitungswerkzeuge in die Aushubstellung wird der Primärkolben über eine Schwimmkolbenbewegung ausgefahren. Durch die Bewegung des Schwimmkolbens in Richtung des Primärkolbens wird eine axiale Verschiebung der Primärkolbenkammer und der sich in der Primärkolbenkammer befindenden Hydraulikflüssigkeit sowie des Primärkolbens verursacht.

In einer anderen bevorzugten Ausführungsform des erfindungsgemäßen Bodenbearbeitungsgeräts ist in dem Einstellschaltzustand des Ventilsystems eine fluidleitende Verbindung von der Schwimmkolbenkammer zu der Ablaufleitung freigegeben, sodass durch Einleiten von druckbeaufschlagter Hydraulikflüssigkeit in die Primärkolbenkammer und/oder eine Gewichtskrafteinwirkung auf den Schwimmkolben ein Ablaufen der sich in der Schwimmkolbenkammer befindenden Hydraulikflüssigkeit bewirkbar ist. In dem Einstellschaltzustand des Ventilsystems ist es vorzugsweise erforderlich, dass durch das Hydrauliksteuergerät am Traktor Druck auf die Druckleitung gegeben wird, damit auch die fluidleitende Verbindung der Ablaufleitung zu einer Tankleitung der Traktorhydraulik freigegeben wird, oder die fluidleitende Verbindung Verbindung der Ablaufleitung zu einer Tankleitung anderweitig freizugeben. Durch das Ablaufen der sich in der Schwimmkolbenkammer befindenden Hydraulikflüssigkeit wird der Schwimmkolben in eine Nullstellung verbracht, sodass die Arbeitstiefeneinstellung nicht durch einen unbeabsichtigten Aushub verfälscht wird. Bei der Einstellung der Arbeitstiefe kommt es also zu einem Zwangsreset des Schwimmkolbens, durch welchen der Schwimmkolben gezwungen wird, eine Nullstellung einzunehmen. Durch das Einleiten von druckbeaufschlagter Hydraulikflüssigkeit in die Primärkolbenkammer und/oder die Gewichtskrafteinwirkung auf den Schwimmkolben kann somit eine immer gleiche Ausgangsposition des Schwimmkolbens im Hydraulikzylinder erreicht werden, bevor beziehungsweise während die Arbeitstiefe eingestellt wird. Dies verhindert eine Fehlbedienung durch den Bediener, sodass das Risiko einer fehlerhaften Arbeitstiefeneinstellung erheblich verringert wird.

Es ist darüber hinaus ein erfindungsgemäßes Bodenbearbeitungsgerät vorteilhaft, bei welchem die Druckleitung einen zu der Primärkolbenkammer führenden Leitungsarm aufweist, entlang welchem sich ein oder mehrere Einstellventile des Ventilsystems befinden. Das eine oder die mehreren Einstellventile befinden sich in dem Einstellschaltzustand des Ventilsystems in einer ersten Schaltstellung, in welcher der zu der Primärkolbenkammer führende Leitungsarm in Richtung der Primärkolbenkammer freigegeben ist. Alternativ oder zusätzlich befinden sich das eine oder die mehreren Einstellventile in dem Aushubschaltzustand des Ventilsystems in einer zweiten Schaltstellung, in welcher der zu der Primärkolbenkammer führende Leitungsarm in Richtung der Primärkolbenkammer gesperrt ist. Das Freigeben und Sperren des zu der Primärkolbenkammer führenden Leitungsarms kann mit einem als 2-2-Wegeventil ausgebildeten Einstellventil umgesetzt werden. In anderen Ausführungsformen können auch mehrere Einstellventile zum Sperren und Freigeben des zu der Primärkolbenkammer führenden Leitungsarms eingesetzt werden.

In einer weiteren bevorzugten Ausführungsform des erfindungsgemäßen Bodenbearbeitungsgeräts weist die Druckleitung einen zu der Schwimmkolbenkammer führenden Leitungsarm auf, entlang welchem sich ein oder mehrere Aushubventile des Ventilsystems befinden. Das eine oder die mehreren Aushubventile befinden sich in dem Einstellschaltzustand des Ventilsystems in einer ersten Schaltstellung, in welcher der zu der Schwimmkolbenkammer führende Leitungsarm in Richtung der Schwimmkolbenkammer gesperrt ist. Alternativ oder zusätzlich befinden sich das eine oder die mehreren Aushubventile in dem Aushubschaltzustand des Ventilsystems in einer zweiten Schaltstellung, in welcher der zu der Schwimmkolbenkammer führende Leitungsarm in Richtung der Schwimmkolbenkammer freigegeben ist. Das Sperren und Freigeben des zu der Schwimmkolbenkammer führenden Leitungsarms kann mit einem als 2-2-Wegeventil ausgebildeten Aushubventil umgesetzt werden. Alternativ können zum Sperren und Freigeben des zu der Schwimmkolbenkammer führenden Leitungsarms auch mehrere Aushubventile eingesetzt werden.

In einer anderen bevorzugten Ausführungsform des erfindungsgemäßen Bodenbearbeitungsgeräts weist das Hydrauliksystem einen mit der Ablaufleitung verbundenen Ablaufanschluss auf, welcher dazu eingerichtet ist, mit einer Tankleitung der Traktorhydraulik verbunden zu werden. Entlang der Ablaufleitung befinden sich ein oder mehrere Ablaufventile des Ventilsystems. Das eine oder die mehreren Ablaufventile befinden sich in dem Einstellschaltzustand des Ventilsystems in einer ersten Schaltstellung, in welcher die Ablaufleitung in Richtung des Ablaufanschlusses freigegeben ist. Alternativ oder zusätzlich befinden sich das eine oder die mehreren Ablaufventile in dem Aushubschaltzustand des Ventilsystems in einer zweiten Schaltstellung, in welcher die Ablaufleitung in Richtung des Ablaufanschlusses gesperrt ist. Das Hydrauliksystem umfasst vorzugsweise einen mit der Druckleitung verbundenen Druckanschluss, welcher dazu eingerichtet ist, mit einer Druckleitung einer Traktorhydraulik verbunden zu werden. Das Hydrauliksystem ist vorzugsweise über den Ablaufanschluss und den Druckanschluss an die Traktorhydraulik angeschlossen.

Es ist darüber hinaus ein erfindungsgemäßes Bodenbearbeitungsgerät vorteilhaft, bei welchem ein Ventil, mehrere Ventile oder sämtliche Ventile des Ventilsystems als elektrohydraulische Ventile ausgebildet sind. Vorzugsweise ist das eine oder sind die mehreren Einstellventile als elektrohydraulische Ventile ausgebildet. Vorzugsweise ist das eine oder sind die mehreren Aushubventile als elektrohydraulische Ventile ausgebildet. Vorzugsweise ist das eine oder sind die mehreren Ablaufventile als elektrohydraulische Ventile ausgebildet. Vorzugsweise ist das eine elektrohydraulische Ventil oder sind die mehreren oder sämtliche elektrohydraulischen Ventile fernsteuerbar, sodass das Ventilsystem von einer entfernten Position aus, beispielsweise aus der Fahrerkabine des Traktors, ferngesteuert in den Einstellschaltzustand und den Aushubschaltzustand verbringbar ist.

In einer weiteren bevorzugten Ausführungsform des erfindungsgemäßen Bodenbearbeitungsgeräts ist die Ablaufleitung mit einem Zylinder einer Traktionsverstärkungseinrichtung verbunden. Alternativ oder zusätzlich ist die Druckleitung mit einem Zylinder einer Steinsicherungseinrichtung verbunden. Die Traktionsverstärkungseinrichtung umfasst vorzugsweise einen Hydraulikzylinder, über welchen Gewicht auf die Hinterachse des Traktors übertragen werden kann. Dies ermöglicht eine Steigerung der Zugkraft und verringert gleichzeitig den Kraftstoffverbrauch. Die Steinsicherungseinrichtung ist vorzugsweise eine hydraulische Überlastsicherung, welche je Pflugkörperpaar des Bodenbearbeitungsgeräts über einen Hydraulikzylinder mit einem direkt verbundenen, stickstoffgefüllten Hydraulikspeicher verfügt.

Die der Erfindung zugrunde liegende Aufgabe wird ferner durch ein Verfahren nach Anspruch 9 gelöst, wobei in dem Einstellschaltzustand des Ventilsystems eine fluidleitende Verbindung von der Druckleitung zu einer an dem Primärkolben angrenzenden Primärkolbenkammer des Hydraulikzylinders freigegeben ist, sodass durch Einleiten von druckbeaufschlagter Hydraulikflüssigkeit in die Druckleitung ein Ausfahren des Primärkolbens zum Einstellen der Arbeitstiefe bewirkt wird. Das Verfahren wird vorzugsweise eingesetzt, um ein Bodenbearbeitungsgerät nach einer der vorstehend beschriebenen Ausführungsformen zu betreiben. Hinsichtlich der Vorteile und Modifikationen des erfindungsgemäßen Verfahrens wird somit zunächst auf die Vorteile und Modifikationen des erfindungsgemäßen Bodenbearbeitungsgeräts verwiesen.

In einer bevorzugten Ausführungsform des erfindungsgemäßen Verfahrens ist in dem Aushubschaltzustand des Ventilsystems eine fluidleitende Verbindung von der Druckleitung zu einer an den Schwimmkolben angrenzenden Schwimmkolbenkammer des Hydraulikzylinders freigegeben, sodass durch Einleiten von druckbeaufschlagter Hydraulikflüssigkeit in die Druckleitung eine zum Ausfahren des Primärkolbens führende Axialbewegung des Schwimmkolbens in Richtung des Primärkolbens zum Verbringen der Bodenbearbeitungswerkzeuge in die Aushubstellung bewirkt wird. Alternativ oder zusätzlich ist in dem Einschaltzustand des Ventilsystems eine fluidleitende Verbindung von der Schwimmkolbenkammer zu der Ablaufleitung freigegeben, sodass durch Einleiten von druckbeaufschlagter Hydraulikflüssigkeit in die Primärkolbenkammer und/oder durch eine Gewichtskrafteinwirkung auf den Schwimmkolben ein Ablaufen der sich in der Schwimmkolbenkammer befindenden Hydraulikflüssigkeit bewirkt wird. Zum Absenken der Bodenbearbeitungswerkzeuge in dem Aushubschaltzustand des Ventilsystems ist kein Druckaufbau über die Hydraulikflüssigkeit erforderlich, da das Absenken der Bodenbearbeitungswerkzeuge von der Aushubstellung in eine Eingriffsstellung über eine Gewichtskrafteinwirkung auf den Schwimmkolben erfolgt.

Das erfindungsgemäße Verfahren wird dadurch vorteilhaft weitergebildet, dass die Druckleitung einen zu der Primärkolbenkammer führenden Leitungsarm aufweist, entlang welchem sich eine oder mehrere Einstellventile des Ventilsystems befinden. Das eine oder die mehreren Einstellventile geben im Einstellschaltzustand des Ventilsystems den zu der Primärkolbenkammer führenden Leitungsarm in Richtung der Primärkolbenkammer frei. Alternativ oder zusätzlich sperren das eine oder die mehreren Einstellventile im Aushubschaltzustand des Ventilsystems den zu der Primärkolbenkammer führenden Leitungsarm in Richtung der Primärkolbenkammer.

Darüber hinaus ist ein erfindungsgemäßes Verfahren vorteilhaft, bei welchem die Druckleitung einen zu der Schwimmkolbenkammer führenden Leitungsarm aufweist, entlang welchem sich ein oder mehrere Aushubventile des Ventilsystems befinden. Das eine oder die mehreren Aushubventile sperren im Einstellschaltzustand des Ventilsystems den zu der Schwimmkolbenkammer führenden Leitungsarm in Richtung der Schwimmkolbenkammer. Alternativ oder zusätzlich geben das eine oder die mehreren Aushubventile im Aushubschaltzustand des Ventilsystems den zu der Schwimmkolbenkammer führenden Leitungsarm in Richtung der Schwimmkolbenkammer frei.

Es ist darüber hinaus ein erfindungsgemäßes Verfahren bevorzugt, bei welchem das Hydrauliksystem einen mit der Ablaufleitung verbundenen Ablaufanschluss aufweist, welcher mit einer Tankleitung der Traktorhydraulik verbunden ist, wobei sich entlang der Ablaufleitung ein oder mehrere Ablaufventile des Ventilsystems befinden. Das eine oder die mehreren Ablaufventile geben im Einstellschaltzustand des Ventilsystems die Ablaufleitung in Richtung des Ablaufanschlusses frei. Alternativ oder zusätzlich sperren das eine oder die mehreren Ablaufventile im Aushubschaltzustand des Ventilsystems die Ablaufleitung in Richtung des Ablaufanschlusses.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Bodenbearbeitungsgeräts in einer perspektivischen Darstellung;
- Fig. 2: die Aushubeinrichtung des in der Fig. 1 abgebildeten Bodenbearbeitungsgeräts in einer perspektivischen Darstellung;
- Fig. 3: das Hydrauliksystem eines erfindungsgemäßen Bodenbearbeitungsgeräts in einer schematischen Darstellung, wobei sich das Ventilsystem in einem Einstellschaltzustand befindet;
- Fig. 4: den Hydraulikzylinder des in der Fig. 3 abgebildeten Hydrauliksystems während des Einstellens einer Arbeitstiefe;
- Fig. 5: das in der Fig. 3 abgebildete Hydrauliksystem in einer schematischen Darstellung, wobei sich das Ventilsystem in einem Aushubschaltzustand befindet; und
- Fig. 6: den Hydraulikzylinder des in der Fig. 5 abgebildeten Hydrauliksystems während des Verbringen der Bodenbearbeitungswerkzeuge in eine Aushubstellung.

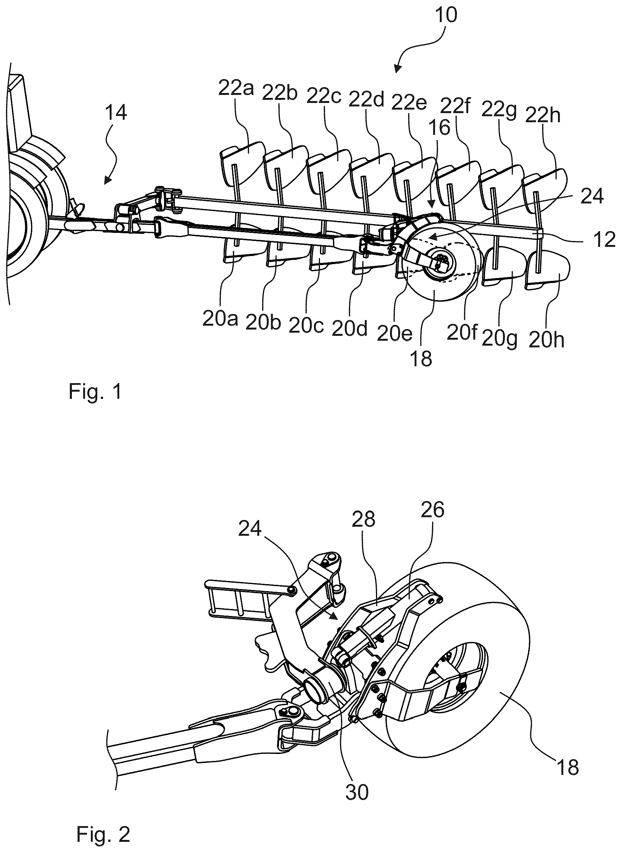

Die Fig. 1 zeigt ein Bodenbearbeitungsgerät 10, welches als Aufsatteldrehpflug, nämlich als Monoradaufsatteldrehpflug, ausgebildet ist. Das Bodenbearbeitungsgerät 10 umfasst einen Maschinenrahmen 12, welcher über eine Deichsel 14 mit einer Kupplungsvorrichtung eines Traktors 100 verbunden ist. Das Bodenbearbeitungsgerät 10 ist als gezogene Maschine ausgeführt, wobei der Traktor 100 die Zugmaschine darstellt.

Das Bodenbearbeitungsgerät 10 weist ferner ein Fahrwerk 16 auf. Das Fahrwerk 16 umfasst ein Rad 18, über welches sich das Bodenbearbeitungsgerät 10 auf einem Boden einer landwirtschaftlichen Nutzfläche abstützt.

An dem Maschinenrahmen 12 sind Bodenbearbeitungswerkzeuge 20a-20h, 22a-22h befestigt. Die Bodenbearbeitungswerkzeuge 20a-20h, 22a-22h sind Pflugkörper, welche zur Bodenbearbeitung durch das Erdreich gezogen werden. Der Maschinenrahmen 12 umfasst hier einen Abschnitt an dem Bodenbearbeitungswerkzeuge 20a-20h, 22a-22h befestigt sind und eine Zugeinrichtung, die die Verbindung zwischen der Deichsel 14 und dem Fahrwerk 16 herstellt. Die Bodenbearbeitungswerkzeuge 20a-20h sind auf einer ersten Seite des Bodenbearbeitungsgeräts 10 angeordnet und befinden sich in dem dargestellten Zustand in Bodeneingriff. Die Bodenbearbeitungswerkzeuge 22a-22h sind auf einer zweiten gegenüberliegenden Seite angeordnet und können über einen Drehvorgang auch in Bodeneingriff gebracht werden.

Das Rad 18 des Fahrwerks 16 und der Maschinenrahmen 12 sind über eine hydraulische Aushubeinrichtung 24 des Fahrwerks 16 relativ zueinander bewegbar. Durch das relative Bewegen von Rad 18 und Maschinenrahmen 12 kann die Arbeitstiefe der Bodenbearbeitungswerkzeuge 20a-20h, 22a-22h eingestellt werden. Ferner können die Bodenbearbeitungswerkzeuge 20a-20h, 22a-22h über eine Relativbewegung von Rad 18 und Maschinenrahmen 12 in eine Aushubstellung verbracht werden.

Die Fig. 2 zeigt, dass die Aushubeinrichtung 24 einen Hydraulikzylinder 26 umfasst, welcher zum Einstellen der Arbeitstiefe der Bodenbearbeitungswerkzeuge 20a-20h, 22a-22h und zum Verbringen der Bodenbearbeitungswerkzeuge 20a-20h 22a-22h in eine Aushubstellung ausfahrbar ist. Der Hydraulikzylinder 26 ist über einen Radträger 28 mit dem Rad 18 verbunden. Ferner ist der Hydraulikzylinder 26 über ein Anlenkglied 30 mit dem Maschinenrahmen 12 verbunden. Das Anlenkglied 30 erlaubt nicht nur die Bodenbearbeitungswerkzeuge 20a-20h, 22a-22h in vorstehend beschriebener Weise auszuheben sondern weist auch eine Drehachse auf mittels welcher der vorgenannte Drehvorgang zum Wechsel der Bodenbearbeitungswerkzeuge 20a-20h auf der ersten Seite zu den Bodenbearbeitungswerkzeugen 22a-22h auf der zweiten Seite durchführbar ist.

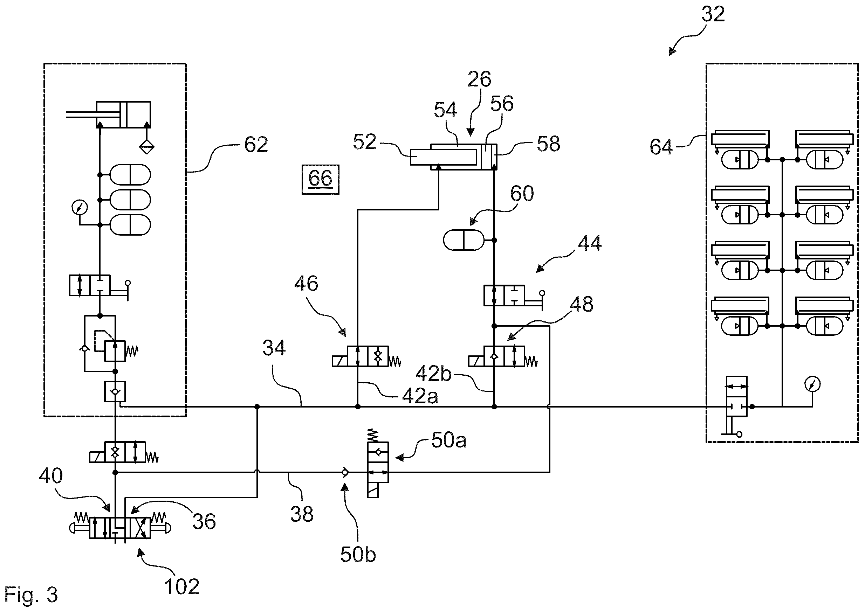

Die Fig. 3 zeigt ein Hydrauliksystem 32 einer Aushubeinrichtung 24 eines Bodenbearbeitungsgeräts 10. Das Hydrauliksystem 32 umfasst eine Druckleitung 34, welche über einen Druckanschluss 36 mit einer Druckleitung einer Traktorhydraulik 102 verbunden werden kann. Ferner umfasst das Hydrauliksystem 32 eine Ablaufleitung 38, welche über einen Ablaufanschluss 40 mit einer Tankleitung der Traktorhydraulik 102 verbunden werden kann.

Die Druckleitung 34 weist zwei Leitungsarme 42, 42b auf. Der Leitungsarm 42a führt über das Einstellventil 46 zu einer Primärkolbenkammer 54 des Hydraulikzylinders 26. Der Leitungsarm 42b führt über das Aushubventil 48 zu einer Schwimmkolbenkammer 58 des Hydraulikzylinders 26.

Der Hydraulikzylinder 26 des Hydrauliksystems 32 umfasst einen Primärkolben 52 und einen Schwimmkolben 56. Das Ventilsystem 44 des Hydrauliksystems 32 umfasst neben dem Einstellventil 46, dem Aushubventil 48 außerdem noch die Ablaufventile 50a, 50b. Die Ablaufventile 50a, 50b sind entlang der Ablaufleitung 38 angeordnet. Außerdem umfasst das Hydrauliksystem 32 eine Dämpfungseinrichtung 60. Die Dämpfungseinrichtung 60 kann vorzugsweise über ein hier nicht dargestelltes 2/2-Wegeventil abgesperrt werden.

Eine Ventilsteuereinheit 66 des Hydrauliksystems 32 ist dazu eingerichtet, das Ventilsystem 44 zum Einstellen der Arbeitstiefe der Bodenbearbeitungswerkzeuge 20a-20h, 22a-22h in einen Einstellschaltzustand oder zum Verbringen der Bodenbearbeitungswerkzeuge 20a-20h, 22a-22h in eine Aushubstellung in einen Aushubschaltzustand zu schalten.

In der Fig. 3 befindet sich das Ventilsystem 44 in dem Einstellschaltzustand. In dem Einstellschaltzustand des Ventilsystems 44 ist eine fluidleitende Verbindung von der Druckleitung 34 zu der an dem Primärkolben 52 angrenzenden Primärkolbenkammer 54 des Hydraulikzylinders 26 freigegeben, sodass durch Einleiten von druckbeaufschlagter Hydraulikflüssigkeit in die Druckleitung 34 ein Ausfahren des Primärkolbens 52 zum Einstellen der Arbeitstiefe bewirkbar ist. In dem Einstellschaltzustand des Ventilsystems 44 ist ferner eine fluidleitende Verbindung von der Schwimmkolbenkammer 58 zu der Ablaufleitung 38 freigegeben, sodass durch Einleiten von druckbeaufschlagter Hydraulikflüssigkeit in die Primärkolbenkammer 54 und eine Gewichtskrafteinwirkung auf den Schwimmkolben 56 ein Ablaufen der sich in der Schwimmkolbenkammer 58 befindenden Hydraulikflüssigkeit bewirkbar ist. Durch das Ablaufen der sich in der Schwimmkolbenkammer 58 befindenden Hydraulikflüssigkeit wird der Schwimmkolben 56 in eine Nullstellung verbracht, sodass die Arbeitstiefeneinstellung nicht durch einen unbeabsichtigten Aushub verfälscht wird. Es kommt also zu einem Zwangsreset vor beziehungsweise während der Einstellung der Arbeitstiefe. Durch Einleiten von druckbeaufschlagter Hydraulikflüssigkeit in die Primärkolbenkammer 54 und durch die Gewichtskrafteinwirkung auf den Schwimmkolben 56 kann somit eine immer gleiche Ausgangsposition des Schwimmkolbens 56 im Hydraulikzylinder 26 erreicht werden, wenn die Arbeitstiefe eingestellt wird. In diesem Fall legt sich der Schwimmkolben 56 an den rechten Anschlag des Hydraulikzylinders 26 an, so dass das Volumen in der Schwimmkolbenkammer minimal wird.

Das Einstellventil 46 befindet sich in dem Einstellschaltzustand des Ventilsystems 44 in einer ersten Schaltstellung, in welcher der zu der Primärkolbenkammer 54 führende Leitungsarm 42 in Richtung der Primärkolbenkammer 54 freigegeben ist. Das Aushubventil 48 befindet sich in dem Einstellschaltzustand des Ventilsystems 44 in einer ersten Schaltstellung, in welcher der zu der Schwimmkolbenkammer 58 führende Leitungsarm 42b in Richtung der Schwimmkolbenkammer 58 gesperrt ist. Das Ablaufventil 50a befindet sich im Einstellschaltzustand des Ventilsystems 44 in einer ersten Schaltstellung, in welcher die Ablaufleitung 38 in Richtung des Ablaufanschlusses 40 freigegeben ist.

Das Einstellventil 46, das Aushubventil 48 und das Ablaufventil 50a sind als fernsteuerbare elektrohydraulische Ventile ausgebildet. Das Einstellventil 46, das Aushubventil 48 und das Ablaufventil 50a können eine Rückholfeder aufweisen und als sitzdichte Ventile ausgeführt sein. In der abgebildeten Konfiguration sind das Einstellventil 46, das Aushubventil 48 und das Ablaufventil 50a in einer Schaltstellung für beide Durchflussrichtungen geöffnet und in der anderen Schaltstellung in beiden oder einer Durchflussrichtung gesperrt. Die Ablaufleitung 38 ist mit einem Zylinder einer Traktionsverstärkungseinrichtung 52 verbunden. Die Druckleitung 34 ist mit mehreren Zylindern einer Steinsicherungseinrichtung 64 verbunden.

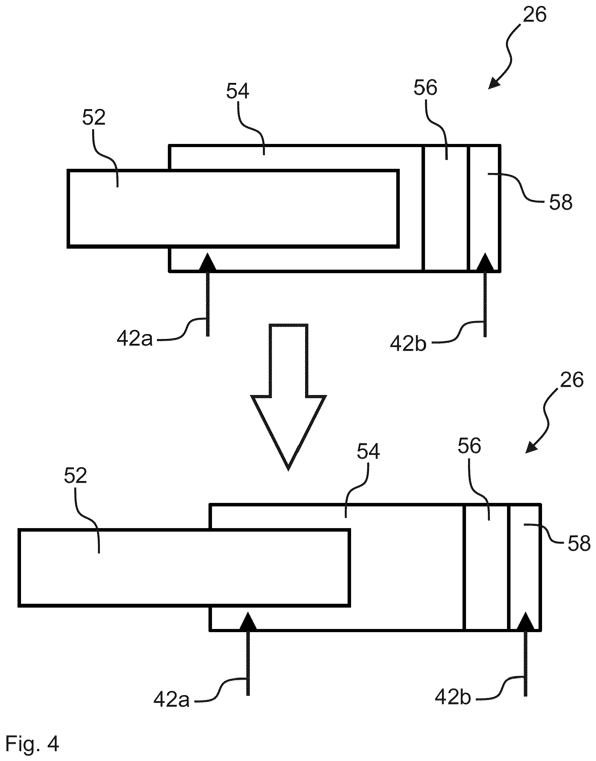

Die Fig. 4 zeigt den Hydraulikzylinder 26 während der Einstellung einer Arbeitstiefe. Der Primärkolben 52 des Hydraulikzylinders 26 ist als Plungerkolben ausgebildet.

Zum Einstellen der Arbeitstiefe wird das Ventilsystem 44 in den Einstellschaltzustand geschaltet, sodass eine fluidleitende Verbindung von der Druckleitung 34 über den Leitungsarm 42a zu der an den Primärkolben 52 angrenzenden Primärkolbenkammer 54 des Hydraulikzylinders 26 freigegeben ist. In dem Einstellschaltzustand kann somit druckbeaufschlagte Hydraulikflüssigkeit in die Primärkolbenkammer 54 eingeleitet werden, wodurch ein Ausfahren des Primärkolbens 52 zum Einstellen der Arbeitstiefe bewirkt wird. Der Schwimmkolben 56 wird im Einstellschaltzustand des Ventilsystems 44 durch das Einleiten von druckbeaufschlagter Hydraulikflüssigkeit in die Primärkolbenkammer 54 und/oder durch die Gewichtskrafteinwirkung auf den Schwimmkolben 56 in eine Nullstellung verbracht, sodass die Arbeitstiefeneinstellung nicht durch einen unbeabsichtigten Aushub verfälscht wird.

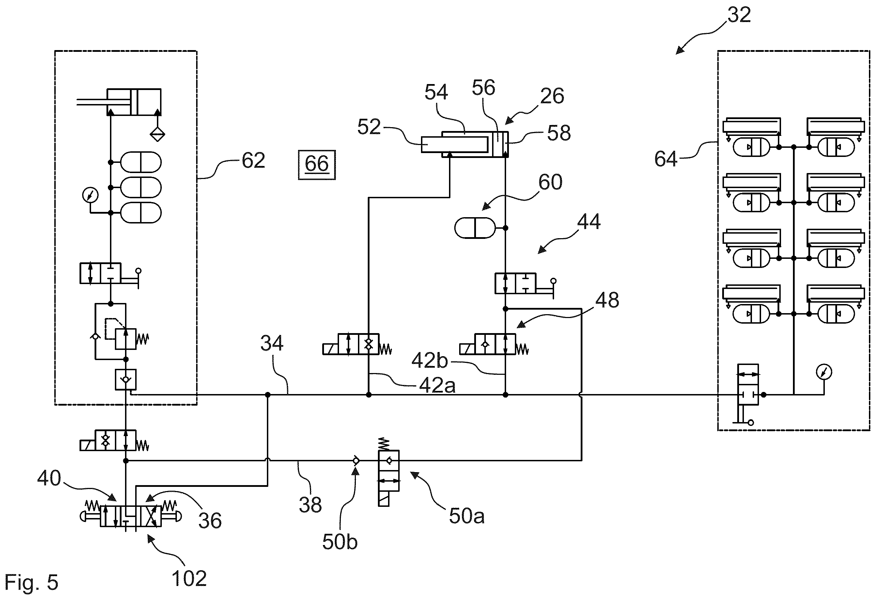

Die Fig. 5 zeigt das Hydrauliksystem 32, wobei sich das Ventilsystem 44 in dem Aushubschaltzustand befindet. In dem Aushubschaltzustand des Ventilsystems 44 ist eine fluidleitende Verbindung von der Druckleitung 34 zu der an den Schwimmkolben 56 angrenzenden Schwimmkolbenkammer 58 des Hydraulikzylinders 26 freigegeben, sodass durch ein Einleiten von druckbeaufschlagter Hydraulikflüssigkeit in die Druckleitung 34 eine zum Ausfahren des Primärkolbens 52 führende Axialbewegung des Schwimmkolbens 56 in Richtung des Primärkolbens 52 zum Verbringen der Bodenbearbeitungswerkzeuge 20a-20h, 22a-22h in die Aushubstellung bewirkbar ist.

Das Einstellventil 46 befindet sich in dem Aushubschaltzustand des Ventilsystems 44 in einer zweiten Schaltstellung, in welcher der zu der Primärkolbenkammer 54 führende Leitungsarm 42a in Richtung der Primärkolbenkammer 54 gesperrt ist. Ferner befindet sich das Aushubventil 48 in dem Aushubschaltzustand des Ventilsystems 44 in einer zweiten Schaltstellung, in welcher der zu der Schwimmkolben 58 führende Leitungsarm 42 in Richtung der Schwimmkolbenkammer 58 freigegeben ist. Das Ablaufventil 50a befindet sich in dem Aushubschaltzustand des Ventilsystems 44 in einer zweiten Schaltstellung, in welcher die Ablaufleitung 38 in Richtung des Ablaufanschlusses 40 gesperrt ist. Die Axialbewegung des Schwimmkolbens 56 führt somit auch zu einem Ausfahren des Primärkolbens 52, um Volumen für das vom Schwimmkolben 56 verdrängte Öl in der Primärkolbenkammer 54 freizugeben.

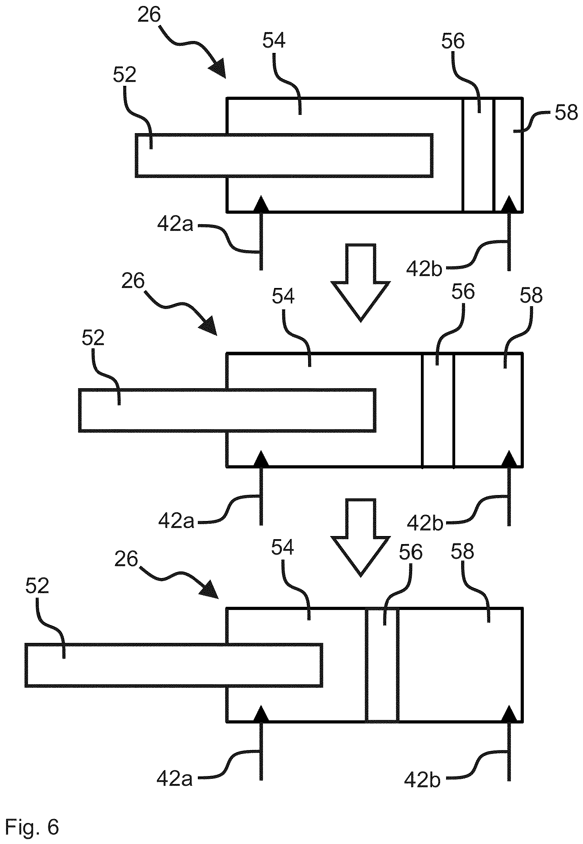

Die Fig. 6 zeigt den Hydraulikzylinder 26 während eines Aushubvorgangs. Während des Aushubvorgangs befindet sich das Ventilsystem 44 in dem Aushubschaltzustand. In dem Aushubschaltzustand des Ventilsystems 44 wird druckbeaufschlagte Hydraulikflüssigkeit über die Druckleitung 34 und den Leitungsarm 42b in die an den Schwimmkolben 56 angrenzende Schwimmkolbenkammer 58 des Hydraulikzylinders 26 eingeleitet. Hierdurch wird eine zum Ausfahren des Primärkolbens 52 führende Axialbewegung des Schwimmkolbens 56 in Richtung des Primärkolbens 52 zum Verbringen der Bodenbearbeitungswerkzeuge 20a-20h, 22a-22h in die Aushubstellung bewirkt. Die Menge an Hydraulikflüssigkeit in der Primärkolbenkammer 54 bleibt während der Schwimmkolbenbewegung konstant. Während des Aushebens der Bodenbearbeitungswerkzeuge 20a-20h, 22a-22h wird also weder Hydraulikflüssigkeit in die Primärkolbenkammer 54 eingeleitet noch wird Hydraulikflüssigkeit aus der Primärkolbenkammer 54 ausgeleitet. Die ursprünglich eingestellt Arbeitstiefe der Bodenbearbeitungswerkzeuge 20a-20h, 22a-22h ist somit nach dem Aushubvorgang wieder auffindbar.

### Bezugszeichenliste

- 10: Bodenbearbeitungsgerät
- 12: Maschinenrahmen
- 14: Deichsel
- 16: Fahrwerk
- 18: Rad
- 20a-20h: Bodenbearbeitungswerkzeuge
- 22a-22h: Bodenbearbeitungswerkzeuge
- 24: Aushubeinrichtung
- 26: Hydraulikzylinder
- 28: Radträger
- 30: Anlenkglied
- 32: Hydrauliksystem
- 34: Druckleitung
- 36: Druckanschluss
- 38: Ablaufleitung
- 40: Ablaufanschluss
- 42a, 42b: Leitungsarme
- 44: Ventilsystem
- 46: Einstellventil
- 48: Aushubventil
- 50a, 50b: Ablaufventile
- 52: Primärkolben
- 54: Primärkolbenkammer
- 56: Schwimmkolben
- 58: Schwimmkolbenkammer
- 60: Dämpfungseinrichtung
- 62: Traktionsverstärkungseinrichtung
- 64: Steinsicherungseinrichtung
- 66: Ventilsteuereinheit
- 100: Traktor
- 102: Traktorhydraulik

## Patentansprüche

1. Bodenbearbeitungsgerät (10), insbesondere Aufsatteldrehpflug, mit
- einem Fahrwerk (16), welches eine hydraulische Aushubeinrichtung (24) und zumindest ein Rad (18) umfasst; und
- einem mit dem Fahrwerk (16) verbundenen Maschinenrahmen (12), an welchem mehrere Bodenbearbeitungswerkzeuge (20a-20h, 22a-22h) befestigt sind,
wobei das Rad (18) des Fahrwerks (16) und der Maschinenrahmen (12) über die hydraulische Aushubeinrichtung (24) des Fahrwerks (16) relativ zueinander bewegbar sind;
wobei die Aushubeinrichtung (24) ein Hydrauliksystem (32) mit einer Druckleitung (34), einer Ablaufleitung (38), einem einen Primärkolben (52) und einen Schwimmkolben (56) aufweisenden Hydraulikzylinder (26), einem Ventilsystem (44) und einer Ventilsteuereinheit (66) umfasst,
wobei die Ventilsteuereinheit (66) dazu eingerichtet ist, das Ventilsystem (44) zum Einstellen einer Arbeitstiefe der Bodenbearbeitungswerkzeuge (20a-20h, 22a-22h) in einen Einstellschaltzustand oder zum Verbringen der Bodenbearbeitungswerkzeuge (20a-20h, 22a-22h) in eine Aushubstellung einen Aushubschaltzustand zu schalten;
wobei in dem Einstellschaltzustand des Ventilsystems (44) eine fluidleitende Verbindung von der Druckleitung (34) zu einer an den Primärkolben (52) angrenzenden Primärkolbenkammer (54) des Hydraulikzylinders (26) freigegeben ist, sodass durch Einleiten von druckbeaufschlagter Hydraulikflüssigkeit in die Druckleitung (34) ein Ausfahren des Primärkolbens (52) zum Einstellen der Arbeitstiefe bewirkbar ist,
**dadurch gekennzeichnet, dass** in dem Aushubschaltzustand des Ventilsystems (44) eine fluidleitende Verbindung von der Druckleitung (34) zu einer an den Schwimmkolben (56) angrenzenden Schwimmkolbenkammer (58) des Hydraulikzylinders (26) freigegeben ist, sodass durch Einleiten von druckbeaufschlagter Hydraulikflüssigkeit in die Druckleitung (34) eine zum Ausfahren des Primärkolbens (52) führende Axialbewegung des Schwimmkolbens (56) in Richtung des Primärkolbens (52) zum Verbringen der Bodenbearbeitungswerkzeuge (20a-20h, 22a-22h) in die Aushubstellung bewirkbar ist.

2. Bodenbearbeitungsgerät (10) nach Anspruch 1,
**dadurch gekennzeichnet, dass** der Primärkolben (52) als Plungerkolben ausgebildet ist.

3. Bodenbearbeitungsgerät (10) nach Anspruch 1 oder 2,
**dadurch gekennzeichnet, dass** in dem Einstellschaltzustand des Ventilsystems (44) eine fluidleitende Verbindung von der Schwimmkolbenkammer (58) zu der Ablaufleitung (38) freigegeben ist, sodass durch Einleiten von druckbeaufschlagter Hydraulikflüssigkeit in die Primärkolbenkammer (54) und/oder eine Gewichtskrafteinwirkung auf den Schwimmkolben (56) ein Ablaufen der sich in der Schwimmkolbenkammer (58) befindenden Hydraulikflüssigkeit bewirkbar ist.

4. Bodenbearbeitungsgerät (10) nach einem der vorstehenden Ansprüche, **dadurch gekennzeichnet, dass** die Druckleitung (34) einen zu der Primärkolbenkammer (54) führenden Leitungsarm (42a) aufweist, entlang welchem sich ein oder mehrere Einstellventile (46) des Ventilsystems (44) befinden,
wobei sich das eine oder die mehreren Einstellventile (46) in dem Einstellschaltzustand des Ventilsystems (44) in einer ersten Schaltstellung befinden, in welcher der zu der Primärkolbenkammer (54) führende Leitungsarm (42a) in Richtung der Primärkolbenkammer (54) freigegeben ist; und/oder
wobei sich das eine oder die mehreren Einstellventile (46) in dem Aushubschaltzustand des Ventilsystems (44) in einer zweiten Schaltstellung befinden, in welcher der zu der Primärkolbenkammer (54) führende Leitungsarm (42a) in Richtung der Primärkolbenkammer (54) gesperrt ist.

5. Bodenbearbeitungsgerät (10) nach einem der vorstehenden Ansprüche, **dadurch gekennzeichnet, dass** die Druckleitung (34) einen zu der Schwimmkolbenkammer (58) führenden Leitungsarm (42b) aufweist, entlang welchem sich ein oder mehrere Aushubventile (48) des Ventilsystems (44) befinden,
wobei sich das eine oder die mehreren Aushubventile (48) in dem Einstellschaltzustand des Ventilsystems (44) in einer ersten Schaltstellung befinden, in welcher der zu der Schwimmkolbenkammer (58) führende Leitungsarm (42b) in Richtung der Schwimmkolbenkammer (58) gesperrt ist; und/oder
wobei sich das eine oder die mehreren Aushubventile (48) in dem Aushubschaltzustand des Ventilsystems (44) in einer zweiten Schaltstellung befinden, in welcher der zu der Schwimmkolbenkammer (58) führende Leitungsarm (42b) in Richtung der Schwimmkolbenkammer (58) freigegeben ist.

6. Bodenbearbeitungsgerät (10) nach einem der vorstehenden Ansprüche, **dadurch gekennzeichnet, dass** das Hydrauliksystem (32) einen mit der Ablaufleitung (38) verbundenen Ablaufanschluss (40) aufweist, welcher dazu eingerichtet, mit einer Tankleitung der Traktorhydraulik (102) verbunden zu werden;
wobei sich entlang der Ablaufleitung (38) ein oder mehrere Ablaufventile (50a, 50b) des Ventilsystems (44) befinden,
wobei sich das eine oder die mehreren Ablaufventile (50a, 50b) in dem Einstellschaltzustand des Ventilsystems (44) in einer ersten Schaltstellung befinden, in welcher die Ablaufleitung (38) in Richtung des Ablaufanschlusses (40) freigegeben ist; und/oder
wobei sich das eine oder die mehreren Ablaufventile (50a, 50b) in dem Aushubschaltzustand des Ventilsystems (44) in einer zweiten Schaltstellung befinden, in welcher die Ablaufleitung (38) in Richtung des Ablaufanschlusses (40) gesperrt ist.

7. Bodenbearbeitungsgerät (10) nach einem der vorstehenden Ansprüche, **dadurch gekennzeichnet, dass** ein Ventil, mehrere Ventile oder sämtliche Ventile des Ventilsystems (44) als elektrohydraulische Ventile ausgebildet sind.

8. Bodenbearbeitungsgerät (10) nach einem der vorstehenden Ansprüche, **dadurch gekennzeichnet, dass** die Ablaufleitung (38) mit einem Zylinder einer Traktionsverstärkungseinrichtung (62) und/oder die Druckleitung (34) mit einem Zylinder einer Steinsicherungseinrichtung (64) verbunden ist.

9. Verfahren zum Betreiben eines Bodenbearbeitungsgeräts (10) nach einem der vorstehenden Ansprüche, mit einem Fahrwerk (16), welches eine hydraulische Aushubeinrichtung (24) und zumindest ein Rad (18) umfasst, und einem mit dem Fahrwerk (16) verbundenen Maschinenrahmen (12), an welchem mehrere Bodenbearbeitungswerkzeuge (20a-20h, 22a-22h) befestigt sind, wobei das Rad (18) des Fahrwerks (16) und der Maschinenrahmen (12) über die hydraulische Aushubeinrichtung (24) des Fahrwerks (16) relativ zueinander bewegbar sind und wobei die Aushubeinrichtung (24) ein Hydrauliksystem (32) mit einer Druckleitung (34), einer Ablaufleitung (38), einem einen Primärkolben (52) und einen Schwimmkolben (56) aufweisenden Hydraulikzylinder (26), einem Ventilsystem (44) und einer Ventilsteuereinheit (66) umfasst, mit den Schritten:
- Schalten des Ventilsystems (44) zum Einstellen einer Arbeitstiefe der Bodenbearbeitungswerkzeuge (20a-20h, 22a-22h) in einen Einstellschaltzustand mittels der Ventilsteuereinheit (66); und
- Schalten des Ventilsystems (44) zum Verbringen der Bodenbearbeitungswerkzeuge (20a-20h, 22a-22h) in eine Aushubstellung in einen Aushubschaltzustand mittels der Ventilsteuereinheit (66);
**dadurch gekennzeichnet, dass** in dem Einstellschaltzustand des Ventilsystems (44) eine fluidleitende Verbindung von der Druckleitung (34) zu einer an den Primärkolben (52) angrenzenden Primärkolbenkammer (54) des Hydraulikzylinders (26) freigegeben ist, sodass durch Einleiten von druckbeaufschlagter Hydraulikflüssigkeit in die Druckleitung (34) ein Ausfahren des Primärkolbens (52) zum Einstellen der Arbeitstiefe bewirkt wird.

10. Verfahren nach Anspruch 9,
**dadurch gekennzeichnet, dass**
- in dem Aushubschaltzustand des Ventilsystems (44) eine fluidleitende Verbindung von der Druckleitung (34) zu einer an den Schwimmkolben (56) angrenzenden Schwimmkolbenkammer (58) des Hydraulikzylinders (26) freigegeben ist, sodass durch Einleiten von druckbeaufschlagter Hydraulikflüssigkeit in die Druckleitung (34) eine zum Ausfahren des Primärkolbens (52) führende Axialbewegung des Schwimmkolbens (56) in Richtung des Primärkolbens (52) zum Verbringen der Bodenbearbeitungswerkzeuge (20a-20h, 22a-22h) in die Aushubstellung bewirkt wird; und/oder
- in dem Einstellschaltzustand des Ventilsystems (44) eine fluidleitende Verbindung von der Schwimmkolbenkammer (58) zu der Ablaufleitung (38) freigegeben ist, sodass durch Einleiten von druckbeaufschlagter Hydraulikflüssigkeit in die Primärkolbenkammer (54) und/oder durch eine Gewichtskrafteinwirkung auf den Schwimmkolben (56) ein Ablaufen der sich in der Schwimmkolbenkammer (58) befindenden Hydraulikflüssigkeit bewirkt wird.

11. Verfahren nach Anspruch 9 oder 10,
**dadurch gekennzeichnet, dass** die Druckleitung (34) einen zu der Primärkolbenkammer (54) führenden Leitungsarm (42a) aufweist, entlang welchem sich ein oder mehrere Einstellventile (46) des Ventilsystems (44) befinden,
wobei das eine oder die mehreren Einstellventile (46) im Einstellschaltzustand des Ventilsystems (44) den zu der Primärkolbenkammer (54) führenden Leitungsarm (42a) in Richtung der Primärkolbenkammer (54) freigeben; und/oder
wobei das eine oder die mehreren Einstellventile (46) im Aushubschaltzustand des Ventilsystems (44) den zu der Primärkolbenkammer (54) führenden Leitungsarm (42a) in Richtung der Primärkolbenkammer (54) sperren.

12. Verfahren nach einem der Ansprüche 9 bis 11,
**dadurch gekennzeichnet, dass** die Druckleitung (34) einen zu der Schwimmkolbenkammer (58) führenden Leitungsarm (42b) aufweist, entlang welchem sich ein oder mehrere Aushubventile (48) des Ventilsystems (44) befinden,
wobei das eine oder die mehreren Aushubventile (48) im Einstellschaltzustand des Ventilsystems (44) den zu der Schwimmkolbenkammer (58) führenden Leitungsarm (42b) in Richtung der Schwimmkolbenkammer (58) sperren; und/oder
wobei das eine oder die mehreren Aushubventile (48) im Aushubschaltzustand des Ventilsystems (44) den zu der Schwimmkolbenkammer (58) führenden Leitungsarm (42b) in Richtung der Schwimmkolbenkammer (58) freigeben.

13. Verfahren nach einem der Ansprüche 9 bis 12,
**dadurch gekennzeichnet, dass** das Hydrauliksystem (32) einen mit der Ablaufleitung (38) verbundenen Ablaufanschluss (40) aufweist, welcher mit einer Tankleitung der Traktorhydraulik (102) verbunden ist, wobei sich entlang der Ablaufleitung (38) ein oder mehrere Ablaufventile (50a, 50b) des Ventilsystems (44) befinden,
wobei das eine oder die mehreren Ablaufventile (50a, 50b) im Einstellschaltzustand des Ventilsystems (44) die Ablaufleitung (38) in Richtung des Ablaufanschlusses (40) freigeben; und/oder
wobei das eine oder die mehreren Ablaufventile (50a, 50b) im Aushubschaltzustand des Ventilsystems (44) die Ablaufleitung (38) in Richtung des Ablaufanschlusses (40) sperren.

## Claims

1. Soil-cultivating apparatus (10), in particular a semi-mounted reversible plow, having
- a chassis (16) which comprises a hydraulic excavation device (24) and at least one wheel (18); and
- a machine frame (12) connected to the chassis (16), to which a plurality of soil-cultivating tools (20a-20h, 22a-22h) are attached,
the wheel (18) of the chassis (16) and the machine frame (12) being movable relative to one another via the hydraulic excavation device (24) of the chassis (16);
the excavation device (24) comprising a hydraulic system (32) having a pressure line (34), a drain line (38), a hydraulic cylinder (26) with a primary piston (52) and a floating piston (56), a valve system (44) and a valve control unit (66),
the valve control unit (66) being configured to switch the valve system (44) into an adjustment switching state in order to adjust a working depth of the soil-cultivating tools (20a-20h, 22a-22h) or into an excavation switching state in order to bring the soil-cultivating tools (20a-20h, 22a-22h) into an excavation position;
in the adjustment switching state of the valve system (44), a fluid-conducting connection from the pressure line (34) to a primary piston chamber (54) of the hydraulic cylinder (26) adjacent to the primary piston (52) being released, so that by introducing pressurized hydraulic fluid into the pressure line (34), the primary piston (52) can be extended in order to adjust the working depth,
**characterized in that** in the excavation switching state of the valve system (44), a fluid-conducting connection from the pressure line (34) to a floating piston chamber (58) of the hydraulic cylinder (26) adjacent to the floating piston (56) is released, so that by introducing pressurized hydraulic fluid into the pressure line (34), an axial movement of the floating piston (56) in the direction of the primary piston (52) that leads to the extension of the primary piston (52) can be effected in order to bring the soil-cultivating tools (20a-20h, 22a-22h) into the excavation position.

2. Soil-cultivating apparatus (10) according to claim 1,
**characterized in that** the primary piston (52) is designed as a plunger.

3. Soil-cultivating apparatus (10) according to either claim 1 or claim 2,
**characterized in that** in the adjustment switching state of the valve system (44), a fluid-conducting connection from the floating piston chamber (58) to the drain line (38) is released, so that by introducing pressurized hydraulic fluid into the primary piston chamber (54) and/or a weight force acting on the floating piston (56), the hydraulic fluid located in the floating piston chamber (58) can be drained.

4. Soil-cultivating apparatus (10) according to any of the preceding claims,
**characterized in that** the pressure line (34) has a line arm (42a) leading to the primary piston chamber (54), along which one or more adjustment valves (46) of the valve system (44) are located,
in the adjustment switching state of the valve system (44), the one or more adjustment valves (46) being in a first switching position in which the line arm (42a) leading to the primary piston chamber (54) is released in the direction of the primary piston chamber (54); and/or
in the excavation switching state of the valve system (44), the one or more adjustment valves (46) being in a second switching position in which the line arm (42a) leading to the primary piston chamber (54) is blocked in the direction of the primary piston chamber (54).

5. Soil-cultivating apparatus (10) according to any of the preceding claims,
**characterized in that** the pressure line (34) has a line arm (42b) leading to the floating piston chamber (58), along which one or more excavation valves (48) of the valve system (44) are located,
in the adjustment switching state of the valve system (44), the one or more excavation valves (48) being in a first switching position in which the line arm (42b) leading to the floating piston chamber (58) is blocked in the direction of the floating piston chamber (58); and/or
in the excavation switching state of the valve system (44), the one or more excavation valves (48) being in a second switching position in which the line arm (42b) leading to the floating piston chamber (58) is released in the direction of the floating piston chamber (58).

6. Soil-cultivating apparatus (10) according to any of the preceding claims,
**characterized in that** the hydraulic system (32) has a drain connection (40) connected to the drain line (38), which is configured to be connected to a tank line of the tractor hydraulics (*102)*;
one or more drain valves (50a, 50b) of the valve system (44) being located along the drain line (38),
in the adjustment switching state of the valve system (44), the one or more drain valves (50a, 50b) being in a first switching position in which the drain line (38) is opened in the direction of the drain connection (40); and/or
in the excavation switching state of the valve system (44), the one or more drain valves (50a, 50b) being in a second switching position in which the drain line (38) is blocked in the direction of the drain connection (40).

7. Soil-cultivating apparatus (10) according to any of the preceding claims,
**characterized in that** one valve, several valves or all valves of the valve system (44) are designed as electrohydraulic valves.

8. Soil-cultivating apparatus (10) according to any of the preceding claims,
**characterized in that** the drain line (38) is connected to a cylinder of a traction assistance device (62) and/or the pressure line (34) is connected to a cylinder of a stone-safety device (64).

9. Method for operating a soil-cultivating apparatus (10) according to any of the preceding claims, having a chassis (16), which comprises a hydraulic excavation device (24) and at least one wheel (18), and a machine frame (12) connected to the chassis (16), to which a plurality of soil-cultivating tools (20a-20h, 22a-22h) are attached, the wheel (18) of the chassis (16) and the machine frame (12) being movable relative to one another via the hydraulic excavation device (24) of the chassis (16), and the excavation device (24) comprising a hydraulic system (32) having a pressure line (34), a drain line (38), a hydraulic cylinder (26) with a primary piston (52) and a floating piston (56), a valve system (44), and a valve control unit (66), comprising the steps of:
- switching the valve system (44) into an adjustment switching state by means of the valve control unit (66) in order to adjust a working depth of the soil-cultivating tools (20a-20h, 22a-22h); and
- switching the valve system (44) into an excavation switching state by means of the valve control unit (66) in order to bring the soil-cultivating tools (20a-20h, 22a-22h) into an excavation position;
**characterized in that** in the adjustment switching state of the valve system (44), a fluid-conducting connection from the pressure line (34) to a primary piston chamber (54) of the hydraulic cylinder (26) adjacent to the primary piston (52) is released, so that by introducing pressurized hydraulic fluid into the pressure line (34), the primary piston (52) is extended in order to adjust the working depth.

10. Method according to claim 9,
**characterized in that**
- in the excavation switching state of the valve system (44), a fluid-conducting connection from the pressure line (34) to a floating piston chamber (58) of the hydraulic cylinder (26) adjacent to the floating piston (56) is released, so that by introducing pressurized hydraulic fluid into the pressure line (34), an axial movement of the floating piston (56) in the direction of the primary piston (52) that leads to the extension of the primary piston (52) is effected in order to bring the soil-cultivating tools (20a-20h, 22a-22h) into the excavation position; and/or
- in the adjustment switching state of the valve system (44), a fluid-conducting connection from the floating piston chamber (58) to the drain line (38) is released, so that by introducing pressurized hydraulic fluid into the primary piston chamber (54) and/or by a weight force acting on the floating piston (56), the hydraulic fluid located in the floating piston chamber (58) can be drained.

11. Method according to claim 9 or 10,
**characterized in that** the pressure line (34) has a line arm (42a) leading to the primary piston chamber (54), along which one or more adjustment valves (46) of the valve system (44) are located,
in the adjustment switching state of the valve system (44), the one or more adjustment valves (46) releasing the line arm (42a) leading to the primary piston chamber (54) in the direction of the primary piston chamber (54); and/or
in the excavation switching state of the valve system (44), the one or more adjustment valves (46) blocking the line arm (42a) leading to the primary piston chamber (54) in the direction of the primary piston chamber (54).

12. Method according to any of claims 9 to 11,
**characterized in that** the pressure line (34) has a line arm (42b) leading to the floating piston chamber (58), along which one or more excavation valves (48) of the valve system (44) are located,
in the adjustment switching state of the valve system (44), the one or more excavation valves (48) blocking the line arm (42b) leading to the floating piston chamber (58) in the direction of the floating piston chamber (58); and/or
in the excavation switching state of the valve system (44), the one or more excavation valves (48) releasing the line arm (42b) leading to the floating piston chamber (58) in the direction of the floating piston chamber (58).

13. Method according to any of claims 9 to 12,
**characterized in that** the hydraulic system (32) has a drain connection (40) connected to the drain line (38), which is connected to a tank line of the tractor hydraulics *(102)*, one or more drain valves (50a, 50b) of the valve system (44) being located along the drain line (38),
in the adjustment switching state of the valve system (44), the one or more drain valves (50a, 50b) releasing the drain line (38) in the direction of the drain connection (40); and/or
in the excavation switching state of the valve system (44), the one or more drain valves (50a, 50b) blocking the drain line (38) in the direction of the drain connection (40).

## Revendications

1. Appareil de travail du sol (10), en particulier charrue réversible semi-portée, comportant
- un châssis (16), qui comprend un dispositif de relevage (24) hydraulique et au moins une roue (18) ; et
- un bâti (12) de machine relié au châssis (16), sur lequel sont fixés plusieurs outils de travail du sol (20a-20h, 22a-22h),
dans lequel la roue (18) du châssis (16) et le bâti (12) de machine peuvent être déplacés l'un par rapport à l'autre par l'intermédiaire du dispositif de relevage (24) hydraulique du châssis (16) ;
dans lequel le dispositif de relevage (24) comprend un système hydraulique (32) comportant une conduite de pression (34), une conduite d'évacuation (38), un vérin hydraulique (26) présentant un piston primaire (52) et un piston flottant (56), un système (44) de vannes et une unité de commande (66) de vannes,
dans lequel l'unité de commande (66) de vannes est conçue pour commuter le système (44) de vannes dans un état de commutation de réglage pour le réglage d'une profondeur de travail des outils de travail du sol (20a-20h, 22a-22h) ou dans un état de commutation de relevage pour le passage des outils de travail du sol (20a-20h, 22a-22h) dans une position de relevage ;
dans lequel, dans l'état de commutation de réglage du système (44) de vannes, une liaison fluidique depuis la conduite de pression (34) vers une chambre (54) à piston primaire du vérin hydraulique (26) adjacente au piston primaire (52) est libérée, de telle sorte que par introduction de liquide hydraulique sous pression dans la conduite de pression (34), une sortie du piston primaire (52) pour le réglage de la profondeur de travail peut être provoquée,
**caractérisé en ce que,** dans l'état de commutation de relevage du système (44) de vannes, une liaison fluidique depuis la conduite de pression (34) vers une chambre (58) à piston flottant du vérin hydraulique (26) adjacente au piston flottant (56) est libérée, de sorte telle que, par introduction de liquide hydraulique sous pression dans la conduite de pression (34), un déplacement axial du piston flottant (56) menant à la sortie du piston primaire (52) en direction du piston primaire (52) pour le passage des outils de travail du sol (20a-20h, 22a-22h) dans la position de relevage peut être provoqué.

2. Appareil de travail du sol (10) selon la revendication 1,
**caractérisé en ce que** le piston primaire (52) est réalisé en tant que piston plongeur.

3. Appareil de travail du sol (10) selon la revendication 1 ou 2,
**caractérisé en ce que,** dans l'état de commutation de réglage du système (44) de vannes, une liaison fluidique depuis la chambre (58) à piston flottant vers la conduite d'évacuation (38) est libérée, de telle sorte que, par introduction de liquide hydraulique sous pression dans la chambre (54) à piston primaire et/ou par une action de poids sur le piston flottant (56), une évacuation du liquide hydraulique se trouvant dans la chambre (58) à piston flottant peut être provoquée.

4. Appareil de travail du sol (10) selon l'une des revendications précédentes,
**caractérisé en ce que** la conduite de pression (34) présente un bras de guidage (42a) menant à la chambre (54) à piston primaire, le long duquel se trouvent une ou plusieurs vannes de réglage (46) du système (44) de vannes,
dans lequel, dans l'état de commutation de réglage du système (44) de vannes, la ou les vannes de réglage (46) se trouvent dans une première position de commutation, dans laquelle le bras de guidage (42a) menant à la chambre (54) à piston primaire est libéré en direction de la chambre (54) à piston primaire ; et/ou
dans lequel, dans l'état de commutation relevage du système (44) de vannes, la ou les vannes de réglage (46) se trouvent dans une deuxième position de commutation dans laquelle le bras de guidage (42a) menant à la chambre (54) à piston primaire est bloqué en direction de la chambre (54) à piston primaire.

5. Appareil de travail du sol (10) selon l'une des revendications précédentes,
**caractérisé en ce que** la conduite de pression (34) présente un bras de guidage (42b) menant à la chambre (58) à piston flottant, le long duquel se trouvent une ou plusieurs vannes de relevage (48) du système (44) de vannes,
dans lequel, dans l'état de commutation de réglage du système (44) de vannes, la ou les vannes de relevage (48) se trouvent dans une première position de commutation, dans laquelle le bras de guidage (42b) menant à la chambre (58) à piston flottant est bloqué en direction de la chambre (58) à piston flottant ; et/ou
dans lequel, dans l'état de commutation de relevage du système (44) de vannes, la ou les vannes de relevage (48) se trouvent dans une deuxième position de commutation dans laquelle le bras de guidage (42b) menant à la chambre (58) à piston flottant est libéré en direction de la chambre (58) à piston flottant.

6. Appareil de travail du sol (10) selon l'une des revendications précédentes,
**caractérisé en ce que** le système hydraulique (32) présente un raccord d'évacuation (40) relié à la conduite d'évacuation (38), qui est conçu pour être relié à une conduite de réservoir du système hydraulique (*102)* du tracteur ;
dans lequel une ou plusieurs vannes d'évacuation (50a, 50b) du système (44) de vannes se trouvent le long de la conduite d'évacuation (38),
dans lequel, dans l'état de commutation de réglage du système (44) de vannes, la ou les vannes d'évacuation (50a, 50b) se trouvent dans une première position de commutation dans laquelle la conduite d'évacuation (38) est libérée en direction du raccord d'évacuation (40) ; et/ou
dans lequel, dans l'état de commutation de relevage du système (44) de vannes, la ou les vannes d'évacuation (50a, 50b) se trouvent dans une deuxième position de commutation dans laquelle la conduite d'évacuation (38) est bloquée en direction du raccord d'évacuation (40).

7. Appareil de travail du sol (10) selon l'une des revendications précédentes,
**caractérisé en ce qu'**une vanne, plusieurs vannes ou l'ensemble des vannes du système (44) de vannes sont conçues comme des vannes électrohydrauliques.

8. Appareil de travail du sol (10) selon l'une des revendications précédentes,
**caractérisé en ce que** la conduite d'évacuation (38) est reliée à un vérin d'un dispositif d'amplification de la traction (62) et/ou la conduite de pression (34) est reliée à un vérin d'un dispositif de sécurité (64) contre les pierres.

9. Procédé permettant de faire fonctionner un appareil de travail du sol (10) selon l'une des revendications précédentes, comportant un châssis (16) qui comprend un dispositif de relevage (24) hydraulique et au moins une roue (18) et un bâti (12) de machine relié au châssis (16), sur lequel sont fixés plusieurs outils de travail du sol (20a-20h, 22a-22h), dans lequel la roue (18) du châssis (16) et le bâti (12) de machine peuvent être déplacés l'un par rapport à l'autre par l'intermédiaire du dispositif de relevage (24) hydraulique du châssis (16) et dans lequel le dispositif de relevage (24) comprend un système hydraulique (32) comportant une conduite de pression (34), une conduite d'évacuation (38), un vérin hydraulique (26) présentant un piston primaire (52) et un piston flottant (56), un système (44) de vannes et une unité de commande (66) de vannes, comportant les étapes consistant à :
- commuter le système (44) de vannes pour le réglage d'une profondeur de travail des outils de travail du sol (20a-20h, 22a-22h) dans un état de commutation de réglage au moyen de l'unité de commande (66) de vannes ; et
- commuter le système (44) de vannes pour le passage des outils de travail du sol (20a-20h, 22a-22h) dans une position de relevage dans un état de commutation de relevage au moyen de l'unité de commande (66) de vannes ;
**caractérisé en ce que,** dans l'état de commutation de réglage du système (44) de vannes, une liaison fluidique depuis la conduite de pression (34) vers une chambre (54) à piston primaire du vérin hydraulique (26) adjacente au piston primaire (52) est libérée, de telle sorte que par introduction de liquide hydraulique sous pression dans la conduite de pression (34), une sortie du piston primaire (52) pour le réglage de la profondeur de travail est provoquée.

10. Procédé selon la revendication 9,
**caractérisé en ce que**
- dans l'état de commutation de relevage du système (44) de vannes, une liaison fluidique depuis la conduite de pression (34) vers une chambre (58) à piston flottant du vérin hydraulique (26) adjacente au piston flottant (56) est libérée, de sorte telle que, par introduction de liquide hydraulique sous pression dans la conduite de pression (34), un déplacement axial du piston flottant (56) menant à la sortie du piston primaire (52) en direction du piston primaire (52) pour le passage des outils de travail du sol (20a-20h, 22a-22h) dans la position de relevage est provoqué ; et/ou
- dans l'état de commutation de réglage du système (44) de vannes, une liaison fluidique depuis la chambre (58) à piston flottant vers la conduite d'évacuation (38) est libérée, de telle sorte que, par introduction de liquide hydraulique sous pression dans la chambre (54) à piston primaire et/ou par une action de poids sur le piston flottant (56), une évacuation du liquide hydraulique se trouvant dans la chambre (58) à piston flottant est provoquée.

11. Procédé selon la revendication 9 ou 10,
**caractérisé en ce que** la conduite de pression (34) présente un bras de guidage (42a) menant à la chambre (54) à piston primaire, le long duquel se trouvent une ou plusieurs vannes de réglage (46) du système (44) de vannes,
dans lequel, dans l'état de commutation de réglage du système (44) de vannes, la ou les vannes de réglage (46) libèrent le bras de guidage (42a) menant à la chambre (54) à piston primaire en direction de la chambre (54) à piston primaire ; et/ou
dans lequel, dans l'état de commutation de relevage du système (44) de vannes, la ou les vannes de réglage (46) bloquent le bras de guidage (42a) menant à la chambre (54) à piston primaire en direction de la chambre (54) à piston primaire.

12. Procédé selon l'une des revendications 9 à 11,
**caractérisé en ce que** la conduite de pression (34) présente un bras de guidage (42b) menant à la chambre (58) à piston flottant, le long duquel se trouvent une ou plusieurs vannes de relevage (48) du système (44) de vannes,
dans lequel, dans l'état de commutation de réglage du système (44) de vannes, la ou les vannes de relevage (48) bloquent le bras de guidage (42b) menant à la chambre (58) à piston flottant en direction de la chambre (58) à piston flottant ; et/ou
dans lequel, dans l'état de commutation de relevage du système (44) de vannes, la ou les vannes de relevage (48) libèrent le bras de guidage (42b) menant à la chambre (58) à piston flottant en direction de la chambre (58) à piston flottant.

13. Procédé selon l'une des revendications 9 à 12,
**caractérisé en ce que** le système hydraulique (32) présente un raccord d'évacuation (40) relié à la conduite d'évacuation (38), lequel est relié à une conduite de réservoir du système hydraulique (*102)* du tracteur, dans lequel une ou plusieurs vannes d'évacuation (50a, 50b) du système (44) de vannes se trouvent le long de la conduite d'évacuation (38),
dans lequel, dans l'état de commutation de réglage du système (44) de vannes, la ou les vannes d'évacuation (50a, 50b) libèrent la conduite d'évacuation (38) en direction du raccord d'évacuation (40) ; et/ou
dans lequel, dans l'état de commutation de relevage du système (44) de vannes ; la ou les vannes d'évacuation (50a, 50b) bloquent la conduite d'évacuation (38) en direction du raccord d'évacuation (40).
